# EUROPEAN PATENT SPECIFICATION

(11) **EP 3 250 462 B1**
(45) Date of publication and mention of the grant of the patent: **13.01.2021**
(21) Application number: 16744153.4
(22) Date of filing: 29.01.2016
(51) Int. Cl.: B65D 1/42, B65D 1/02, B65D 41/04, B65D 85/72, C08L 67/03, C08L 101/00

(54) **REUSABLE BOTTLE WITH DEFINED SCUFFING BAND**
MEHRWEGFLASCHE MIT DEFINIERTEM REIBUNGSBAND
BOUTEILLE RÉUTILISABLE AVEC BANDE D'ÉRAFLURES DÉFINIE

(30) Priority: 30.01.2015 US 201562109854 P
(43) Date of publication of application: 06.12.2017
(73) Proprietor: The Coca-Cola Company, Atlanta, GA 30313 (US)
(72) Inventor: MOORE, Roger Ian, Beccles Suffolk NR34 9RW (GB); MOFFITT, Ronald D., Spartanburg, South Carolina 29301 (US)
(74) Representative: Dehns
(86) International application number: PCT/US2016/015511
(87) International publication number: WO 2016/123423

(56) References cited:
- EP-A2- 0 247 566
- EP-B1- 0 038 111
- WO-A2-2010/147893
- DE-U1- 7 907 540
- DE-U1- 8 438 132
- GB-A- 2 101 071
- US-A- 4 140 236
- US-A- 4 919 284
- US-A- 5 780 130
- US-A1- 2010 170 199

## Description

### TECHNICAL FIELD

This disclosure relates to reusable polymer packaging designs having improved life cycles, and methods for improving the scuff resistance of a reusable polymer package.

### BACKGROUND

Reusable packaging can provide an economically efficient and environmentally benign use of packaging materials and a viable means of source reduction. The economics of reusable packaging are based in large measure upon the amortization of the initial packaging investment over the average number of return trips for the package. Additional costs associated with the logistical requirements of a reusable packaging system such as cleaning, reconstitution, and assessment for reuse and the like, should also be considered in the overall cost and profitability analysis.

Refillable carbonated soft drink (CSD) bottles represent an important and growing renewable packaging application. Visual appearance is an important parameter used to assess bottle quality and determine bottle lifetime. Refillable poly(ethylene terephthalate) (PET) carbonated beverage bottles can often be reused for more than 20 refilling cycles before scuffing and scratches around the base and upper contact diameters of the bottle become severe. Scuffing damage to the bottles incurred while in circulation accumulates with each return cycle, until the bottle becomes so hazy that it must be rejected for excessive damage.

Therefore, there is a continuing need for packaging materials, methods and designs that permit a specific type of packaging to be reused as often as possible. One possible method to improve the useful life cycle of a package might be to develop economical and effective means of preventing, reducing, limiting, or focusing scratches and scuffs on refillable bottle surfaces. Desirably, such methods would be environmentally friendly and preferably would not increase the complexity of the refilling process by requiring additional steps.

### SUMMARY OF THE INVENTION

The present disclosure provides, among other things, reusable packaging materials, methods and designs that provide improved life cycles, that is, the number of times the package can be refilled. Specifically, there are provided effective and economical methods and designs for preventing scratches and scuffs on refillable bottle surfaces. Reusable containers with raised bands around their two largest circumferences are known, see e.g. US2010170199, US5780130, DE7907540 or DE8438132. These known raised bands, which can limit wear of the containers, are continuous. It has been found that by localizing the bottle wear in a more controlled manner than previously possible, a refillable bottle is provided that is more resistant to scuffing. This improved scuff resistance, in turn, increases packaging life cycle. It has also been unexpectedly found that by localizing the wear in the manner provided by this disclosure, the controlled wear of the bottle is not as noticeable to the customer or consumer, which increases the percentage of returned bottles that can be refilled. The disclosed methods are environmentally friendly and do not require additional steps to the refilling process.

According to the invention, there is provided a refillable polymer container, such as a polyester container, comprising a polymer composition, wherein the container comprises a first raised wear band around the largest circumference of the container, the outer diameter of the wear band being greater than the outer diameter of the container above and below the wear band, and a second raised wear band around the second largest circumference of the container, wherein the first raised wear band is non-continuous. While this invention refers to refillable polyester containers, the wear band applies generally to polymer containers of many different polymer compositions as described herein.

According to another aspect, the invention provides a method for reducing scuffing of a refillable polyester container, wherein the refillable polyester container comprises a polyester composition, the method comprising providing a raised wear band around the largest circumference of the container, the outer diameter of the wear band being greater than the outer diameter of the container above and below the wear band, in accordance with appended claim 7.

There is also provided a packaged beverage according to claim 12, wherein the beverage is packaged in a refillable polyester container comprising a polyester composition, wherein the container comprises a raised wear band around the largest circumference of the container, the outer diameter of the wear band being greater than the outer diameter of the container above and below the wear band. Typically, the packaged beverage is a carbonated soft drink.

### BRIEF DESCRIPTION OF THE DRAWINGS

Some features of the invention are illustrated in the drawings provided herein, as follows.

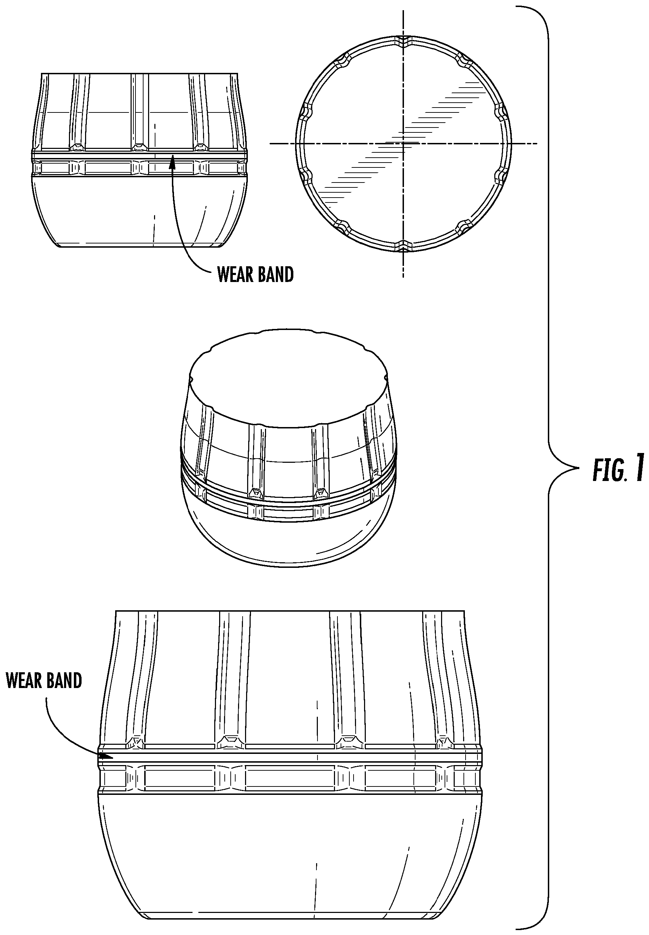

FIG. 1 illustrates an example of a refillable bottle incorporating an wear band to focus and limit wear to a prescribed peripheral area near the bottle base. As illustrated, the refillable bottle has peripheral wear bands at the bottle exterior contact points. As shown, elements of this design feature can include the incorporation of a continuous, raised surface or "wear band" for constraining bottle-to-bottle contact and abrasion, which blocks the upper and lower surface of the bottle (above and below the wear band), that is blocked from abrasion by the raised surface.

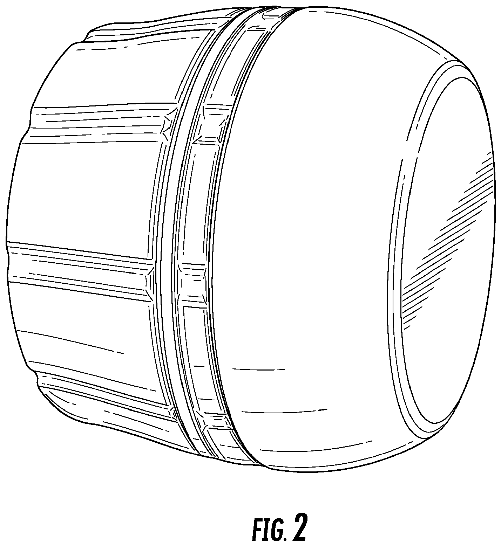

FIG. 2 illustrates a three-dimensional rendering of the scuffing wear band concept shown in FIG. 1, showing the continuous wear band at the largest diameter of the refillable bottle.

### DETAILED DESCRIPTION OF THE INVENTION

This disclosure can provide for addressing at least in part the continuing need for packaging materials, methods and designs that permit a specific type of packaging to be reused more times that is currently possible. Aspects of this disclosure can also provide for improvement in the useful life cycle of a package, by affording more economical and more effective means of limiting, reducing, or focusing scratches and scuffs on refillable bottle surfaces.

In one aspect, this disclosure also provides concepts for reducing scuffing and scratching on a refillable PET bottle surface, namely by creating molded-in, peripheral wear bands on the bottle exterior. These peripheral wear bands are arranged at the bottle exterior contact points. In one aspect, FIG. 1 illustrates this concept, in which a refillable bottle is shown having molded-in peripheral wear bands at the bottle exterior contact points. As seen FIG. 1, this design feature includes one or more of the following: **1)** the incorporation of a peripherally continuous, raised surface for limiting and focusing bottle-to-bottle contact, wear, and abrasion; **2)** both lower and upper surfaces that are precluded from abrasion and damage by the raised surface; and **3)** the development of an abrasion pattern that appears as well-defined, controlled, and aesthetically benign on the contact surface of the bottle, as a result of the focused bottle-to-bottle friction or abrasion. That is, the continuous and non-intermittent raised surface largely constrains bottle-to-bottle contact and abrasion to that raised surface that spans the outer circumference of the bottle.

According to the invention, there are provided other concepts for reducing scuffing on a refillable PET bottle surface, namely by creating differently-shaped molded-in, non-continuous peripheral wear bands on the bottle exterior. These non-continuous peripheral wear bands can be arranged and shaped in any number of ways, as long as the wear bands present raised surfaces for limiting and focusing bottle-to-bottle contact and wear.

That is, the non-continuous or intermittent wear band can include one type of geometric shape having the same or different sizes or relative proportions. Alternatively, the non-continuous or intermittent wear band can include more than one type of geometric shape, with each type having the same or different sizes or relative proportions. For example, when the wear band is non-continuous or intermittent, the various geometric shapes can comprise or can be selected from triangles, rectangles, diamonds, circles, regular or irregular polygons having any desired number of sides typically less than about 12 (for example, octagons), or any variety of irregular shapes. The shapes and sizes are selected such that the particular collection of shapes used in a bottle do not interlock on a conveyor system. Generally, the various geometric shapes constitute raised surfaces with sides having a desired steepness associated with the geometric shape, although some curvature of the surface is typical.

According to one aspect, the elements of this design feature include one or more of the following: **1)** the incorporation of an intermittent, discontinuous, raised surface for constraining bottle-to-bottle contact and abrasion; **2)** a lower and an upper surface that is blocked from abrasion by the raised surface; **3)** the development of an abrasion pattern that develops appears as intentionally frosted discontinuous raised surfaces on the contact surface of the bottle, as a result of bottle-to-bottle contact, friction, or other abrasion. For example, when the intermittent, discontinuous, raised surface includes a number of raised rectangular surfaces or protrusions arranged in a desired pattern, the abrasion pattern that develops will appear as an intentionally frosted discontinuous pattern of rectangles on the contact surface of the bottle, resulting from bottle-to-bottle contact and abrasion. Again, the wear on the bottle is concentrated at the peaks of the surface protrusions, which confines and limits the surface damage to the designated raised areas, such that the surrounding bottle surfaces remain transparent and essentially free of scuffs and scratches.

Therefore, according to this disclosure, there is provided a refillable polyester container comprising a polyester composition, wherein the container comprises a raised wear band around the largest circumference of the container, the outer diameter of the wear band being greater than the outer diameter of the container above and below the wear band. There is also provided a method for reducing scuffing of a refillable polyester container, wherein the refillable polyester container comprises a polyester composition, the method comprising providing a raised wear band around the largest circumference of the container, the outer diameter of the wear band being greater than the outer diameter of the container above and below the wear band. The refillable polyester container can further include an injection molded threaded neck finish for receiving a screw threaded closure, and is typically provides with a screw threaded closure.

The wear band of the refillable polyester container disclosed herein can be continuous, however the wear band of the invention is non-continuous or intermittent. In either case, the wear band substantially limits scuffing and wear of the container to the peripheral area of the wear band. According to the invention, the refillable polyester container further includes a second raised wear band around the second largest circumference of the container. The methods and structures of this disclosure are applicable to any type of refillable polyester container, including those with a petaloid or a champagne base, single-layered or multilayered containers, and those comprising homopolymers or copolymers.

According to a further aspect, the design disclosed herein can incorporate two parallel wear bands situated perpendicular to the bottle axis at the two primary contact points, that is, at the two largest diameter peripheries of the bottle. Typically, these two primary contact points occur above and below the bottle label panel. Of the two parallel wear bands, the wear band having the largest diameter around the largest circumference of the bottle (the "major" wear band) is typically situated at the contact point below the bottle label panel as shown in FIG. 1 and FIG. 2. This disclosure also provides for a second wear band around a smaller circumference of the bottle (the "minor" wear band) that typically occurs at the contact point above the bottle label panel. This smaller circumference of the bottle at the contact point above the bottle label panel is not shown in FIGS. 1 or 2.

In a further aspect, the design disclosed herein can incorporate one, two, three, or more wear bands. Generally, when more than one wear band is present, the multiple bands will be parallel to each other and in their respective planes perpendicular to the bottle axis. When two wear bands are present, they typically can be located at the two "primary" contact points of the two largest diameters of the bottle peripheries.

The dimensions of the wear bands, whether continuous or discontinuous, can vary as a function of the overall bottle shape, the locations of the two primary contact points (major and minor wear bands) relative to each other, the locations of the major and minor wear bands relative to the bottle label panel, and the like. The wear bands can accumulate significant wear in a relatively very narrow peripheral band. While the length of the band generally extends for the entire circumference of the bottle, the width of the wear band can vary considerably as desired. For example, with respect to a 2.5 liter PET refillable carbonated soft drink ("CSD") bottle, a wear band situated around the largest circumference of the bottle at the contact point below the bottle label panel, as illustrated in FIGS. 1 and 2, can have a width of about 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, 11 mm, 12 mm, 13 mm, 14 mm, 15 mm, 17 mm, 20 mm, 25 mm, 30 mm, 35 mm, 40 mm, 45 mm, or 50 mm, or even larger or smaller if desired. If the bottle contains a second "minor" wear band, located around the second largest circumference of the bottle, this wear band can also have a width of about 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, 11 mm, 12 mm, 13 mm, 14 mm, 15 mm, 17 mm, 20 mm, 25 mm, 30 mm, 35 mm, 40 mm, 45 mm, or 50 mm, or smaller or even larger if desired. That is, the second "minor" wear band can have a width that is less than, equal to, or greater than the width of the "major" wear band around the largest circumference of the bottle, depending on the desired performance, aesthetics, or costs in producing such bands.

Further, with respect to a 2.5 liter PET refillable carbonated soft drink ("CSD") bottle, a "major" wear band situated around the largest circumference of the bottle, as illustrated in FIGS. 1 and 2, can have a width of from about 0.5 mm to about 50 mm; alternatively, from about 1 mm to about 25 mm; alternatively, from about 2 mm to about 12 mm; alternatively, from about 3 mm to about 10 mm; or alternatively, from about 4 mm to about 8 mm. Similarly, when present and with respect to a 2.5 liter PET refillable carbonated soft drink ("CSD") bottle, a "minor" wear band can have a width of from about 0.5 mm to about 50 mm; alternatively, from about 1 mm to about 25 mm; alternatively, from about 2 mm to about 12 mm; alternatively, from about 3 mm to about 10 mm; or alternatively, from about 4 mm to about 8 mm

Commercially available equipment, such as used in manufacturing conventional thick wall refillable PET containers may be used for fabricating the bottles disclosed herein. Implementing the molded-in, peripheral wear bands on a bottle exterior can be achieved by incorporating the bands by minor alternations or adjustments of the die tooling segments used in the blow molding process. That is, modifications to the mold halves that incorporate the desired shape, size and structure of the raised wear band can be made, and the bottle incorporating the desired wear bands can be produced according to the standard injection stretch blow molding processes.

Visual appearance or optical properties can be employed to determine bottle lifetime. Specifically, scuffing detection for refillable bottles generally can be performed using an optical device for a "go" or "no go" selection of acceptable bottles to remain in the loop of refilling and reuse. The disclosed wear ring provides greater control over the extent of the sacrificial scuffing area. The wear ring concept also provides for greater simplicity in scuffing detection than concepts using a textured surface, because the small, discrete wear domains in a textures surface typically are distributed over a larger area of the bottle.

The preforms and refillable polyester containers made therefrom can be single layer or multilayer preforms and containers. For example, the container can be formed of a single layer of a polyethylene terephthalate (PET) polymer or copolymer having a comonomer such as 1,4-cyclohexanedimethanol (CHDM) or isophthalic acid (IPA). In another aspect, the preforms and containers can be multilayer. For example, in one embodiment, a multilayer preform can have an interior layer of a first copolymer polyester, and an exterior layer of a second polyester having relatively less copolymer, and therefore a rate of crystallization somewhat higher than the first polyester.

Thus, this disclosure provides for a refillable polyester container that can comprise a homopolymer or copolymer of polyethylene terephthalate (PET). For example, the polyester composition can be substantially polyethylene terephthalate (PET). The container can be monolayer or multilayer container. Further, the container can comprises a polyester composition and one or more polymers selected from polyamide, polycarbonate, acrylic/imide, amorphous nylon, polyacrylonitrile (PAN), polystyrene, crystallizable nylon, polyethylene (PE), polypropylene (PP), and polyvinyl chloride (PVC). The polyester composition can include one or more polymers selected from homopolymers, copolymers or blends of polyethylene terephthalate (PET); polybutylene terephthalate (PBT); polypropylene terephthalate (PPT); polyethylene naphthalate (PEN); poly(ethylene furanoate) (PEF); and cyclohexane dimethanol/PET copolymer.

The wear band concept is not limited only to polyester containers but can be applied to a wide range of polymeric packaging materials. For example, suitable polymeric packaging materials for use in container and bottles having the wear band concept can include one or more plastic resins such as high density polyethylene (HDPE), low density polyethylene (LDPE), linear low density polyethylene (LLDPE), polyethylene terephthalate (PET), poly(ethylene-co-furandicarboxylic acid) (PEF), polyvinyl chloride (PVC), polypropylene (PP), polystyrene (PS), polyamides (PA), acrylonitrile butadiene styrene (ABS), polycarbonate (PC), polyurethane (PU), melamine formaldehyde (MF), phenolics (PF), polyetherketones (PEEK), polylactic acids (PLA), polymethyl methacrylate (PMMA), polytetrafluoroethylene (PTFE), urea-formaldehyde (UF), post-consumer resins, bioplastics, and the like. Therefore, disclosure information and data that is recited in terms of a polyester is similarly applicable to other polymeric packaging materials.

### Definitions

To define more clearly the terms used herein, the following definitions are provided, which are applicable to this disclosure unless otherwise indicated by the disclosure or the context. To the extent that any definition or usage provided by any document incorporated herein by reference conflicts with the definition or usage provided herein, the definition or usage provided herein controls.

The term "major" wear band is the wear band located around the largest circumference and therefore at the largest diameter of the bottle, when the bottle is generally described as having a circular cross section. The bottle may only have one wear band, and if it is located around the largest circumference of the bottle, it can be considered and termed the major wear band, even if there is no second wear band around the bottle. The "major" wear band is typically but not always situated at the contact point below the bottle label panel as shown in FIG. 1 and FIG. 2.

The term "minor" wear band is the wear band located around a bottle circumference that is smaller than the largest circumference and is most typically located about the second largest bottle circumference and at the second largest bottle diameter, when the bottle is generally described as having a circular cross section. The "major" wear band is typically but not always situated at the contact point above the bottle label panel. If the bottle has a single wear band that is not located around the largest circumference of the bottle, it can be considered and termed the minor wear band, even if there is no second wear band around the bottle.

As used in the specification and the appended claims, the singular forms "a," "an," and "the" include plural referents, unless the context clearly dictates otherwise. Thus, for example, reference to "a rectangle" includes a single rectangle as well as any combination of more than one rectangle if the context indicates or allows, such as multiple rectangles of any size or combination of sizes.

Throughout the specification and claims, the word "comprise" and variations of the word, such as "comprising" and "comprises," means "including but not limited to," and is not intended to exclude, for example, other additives, components, elements, or steps. While compositions and methods are described in terms of "comprising" various components or steps, the compositions and methods can also "consist essentially of' or "consist of' the various components or steps.

Reference throughout this specification to "one embodiment," "an embodiment," or "embodiments" means that a particular feature, structure, or characteristic described in connection with the embodiment is included in at least one embodiment. Thus, the appearances of the phrases "in one embodiment" or "in an embodiment" in various places in the specification are not necessarily all referring to the same embodiment. Furthermore, the particular features, aspects, structures, or characteristics may be combined in any suitable manner in one or more embodiments.

"Optional" or "optionally" means that the subsequently described element, component, step, or circumstance can or cannot occur, and that the description includes instances where the element, component, step, or circumstance occurs and instances where it does not.

Unless indicated otherwise, when a range of any type is disclosed or claimed, for example a range of the sizes, number, percentages, and the like, it is intended to disclose or claim individually each possible number that such a range could reasonably encompass, including any sub-ranges or combinations of sub-ranges encompassed therein. When describing a range of measurements such as sizes or percentages, every possible number that such a range could reasonably encompass can, for example, refer to values within the range with one significant figure more than is present in the end points of a range, or refer to values within the range with the same number of significant figures as the end point with the most significant figures, as the context indicates or permits. For example, when describing a range of percentages such as from 85% to 95%, it is understood that this disclosure is intended to encompass each of 85%, 86%, 87%, 88%, 89%, 90%, 91%, 92%, 93%, 94%, and 95%, as well as any ranges, sub-ranges, and combinations of sub-ranges encompassed therein. Applicant's intent is that these two methods of describing the range are interchangeable. Accordingly, Applicant hereby discloses that any individual member or members of any such group, including any sub-ranges or combinations of sub-ranges within the group, can be excluded by proviso for any reason, if Applicant chooses to claim less than the full measure of the disclosure, for example, to account for a reference that Applicant may be unaware of at the time of the filing of the application.

Values or ranges may be expressed herein as "about", from "about" one particular value, and/or to "about" another particular value. When such values or ranges are expressed, other embodiments disclosed include the specific value recited, from the one particular value, and/or to the other particular value. Similarly, when values are expressed as approximations, by use of the antecedent "about," it will be understood that the particular value forms another embodiment. It will be further understood that there are a number of values disclosed therein, and that each value is also herein disclosed as "about" that particular value in addition to the value itself. In another aspect, use of the term "about" means ±20% of the stated value, ±15% of the stated value, ±10% of the stated value, ±5% of the stated value, or ±3% of the stated value.

Those skilled in the art will readily appreciate that many modifications are possible in the exemplary embodiments disclosed herein without materially departing from the novel teachings and advantages described in this disclosure. Accordingly, all such modifications and equivalents are intended to be included within the scope of the disclosure as defined in the following claims. Therefore, it is to be understood that resort can be had to various other aspects, embodiments, modifications, and equivalents thereof which, after reading the description herein, may suggest themselves to one of ordinary skill in the art without departing from the scope of the present disclosure, and that the invention is only limited by the scope of the appended claims.

Although only preferred embodiments of the refillable and reusable bottle comprising a scuffing or wear band has been specifically set forth herein, it is to be understood that minor variations may be made in the bottle or process without departing from the scope of the invention, which is defined by the appended claims.

## Claims

1. A refillable polyester container comprising a polyester composition, wherein the container comprises:
a first raised wear band around the largest circumference of the container, the outer diameter of the wear band being greater than the outer diameter of the container above and below the wear band; and
a second raised wear band around the second largest circumference of the container, **characterised in that** the first raised wear band is non-continuous.

2. A refillable polyester container according to claim 1, wherein the wear band comprises one type of geometric shape, each individual shape having the same or different sizes or relative proportions, or the wear band comprises more than one type of geometric shape, with each type having the same or different sizes or relative proportions, or
wherein the wear band comprises one type or more than one type of geometric shape, each individual shape selected from triangles, rectangles, diamonds, regular or irregular polygons having any desired number of sides less than about 12, or irregular shapes, wherein the shapes do not interlock on a conveyor system.

3. A refillable polyester container according to claim 1, wherein the wear band has a width of from about 0.5mm to about 50mm, and/or
wherein the base of the container is a petaloid or a champagne base.

4. A refillable polyester container according to claim 1, further comprising an injection molded threaded neck finish for receiving a screw threaded closure, and preferably further comprising the screw threaded closure.

5. A refillable polyester container according to claim 1, wherein the polyester composition comprises a homopolymer or copolymer of polyethylene terephthalate (PET), and
wherein preferably the polyester composition is substantially polyethylene terephthalate (PET).

6. A refillable polyester container according to claim 1, wherein the container is a monolayer or multilayer container and comprises a polyester composition and one or more polymers selected from polyamide, polycarbonate, acrylic/imide, amorphous nylon, polyacrylonitrile (PAN), polystyrene, crystallizable nylon, polyethylene (PE), polypropylene (PP), and polyvinyl chloride (PVC), and
wherein preferably the polyester composition comprises one or more polymers selected from homopolymers, copolymers or blends of polyethylene terephthalate (PET); polybutylene terephthalate (PBT); polypropylene terephthalate (PPT); polyethylene naphthalate (PEN); poly(ethylene furanoate) (PEF); and cyclohexane dimethanol/PET copolymer.

7. A method for reducing scuffing of a refillable polyester container, wherein the refillable polyester container comprises a polyester composition, the method comprising:
providing a non-continuous raised wear band around the largest circumference of the container, the outer diameter of the wear band being greater than the outer diameter of the container above and below the wear band; and
providing a second raised wear band around the second largest circumference of the container.

8. A method according to claim 7, wherein the wear band has a width of from about 0.5 mm to about 50 mm, and/or
wherein the base of the container is a petaloid or a champagne base.

9. A method according to claim 7, wherein the container further comprises an injection molded threaded neck finish for receiving a screw threaded closure, and
wherein preferably the container further comprises the screw threaded closure.

10. A method according to claim 7, wherein the polyester composition comprises a homopolymer or copolymer of polyethylene terephthalate (PET), and
wherein preferably the polyester composition is substantially polyethylene terephthalate (PET).

11. A method according to claim 7, wherein the container is a monolayer or multilayer container and comprises a polyester composition and one or more polymers selected from polyamide, polycarbonate, acrylic/imide, amorphous nylon, polyacrylonitrile (PAN), polystyrene, crystallizable nylon, polyethylene (PE), polypropylene (PP), and polyvinyl chloride (PVC), and
wherein preferably the polyester composition comprises one or more polymers selected from homopolymers, copolymers or blends of polyethylene terephthalate (PET); polybutylene terephthalate (PBT); polypropylene terephthalate (PPT); polyethylene naphthalate (PEN); poly(ethylene furanoate) (PEF); and cyclohexane dimethanol/PET copolymer.

12. A packaged beverage, wherein the beverage is packaged in a refillable polyester container according to claim 1.

## Patentansprüche

1. Nachfüllbarer Polyesterbehälter, der eine Polyesterzusammensetzung umfasst, wobei der Behälter Folgendes umfasst:
einen ersten hervorstehenden Verschleißbund um den größten Umfang des Behälters herum, wobei der äußere Durchmesser des Verschleißbunds größer als der äußere Durchmesser des Behälters oberhalb und unterhalb des Verschleißbunds ist; und
einen zweiten hervorstehenden Verschleißbund um den zweitgrößten Umfang des Behälters herum, **dadurch gekennzeichnet, dass** der erste hervorstehende Verschleißbund nicht durchgängig ist.

2. Nachfüllbarer Polyesterbehälter nach Anspruch 1, wobei der Verschleißbund eine Art von geometrischer Form umfasst, wobei jede einzelne Form die gleichen oder verschiedene Größen oder relativen Größenverhältnisse aufweist, oder der Verschleißbund mehrere Arten von geometrischen Formen umfasst, wobei jede Art die gleichen oder verschiedene Größen oder relativen Größenverhältnisse aufweist, oder
wobei der Verschleißbund eine oder mehrere Arten von geometrischen Formen umfasst, wobei jede einzelne Form aus Dreiecken, Rechtecken, Rauten, regelmäßigen oder unregelmäßigen Polygonen mit einer beliebigen gewünschten Anzahl an Seiten von weniger als etwa 12, oder unregelmäßigen Formen ausgewählt sind, wobei die Formen auf einer Förderanlage nicht miteinander verzahnen.

3. Nachfüllbarer Polyesterbehälter nach Anspruch 1, wobei der Verschleißbund eine Breite von etwa 0,5 mm bis etwa 50 mm aufweist und/oder
wobei es sich bei dem Boden des Behälters um einen Petaloid- oder Champagnerboden handelt.

4. Nachfüllbarer Polyesterbehälter nach Anspruch 1, der ferner ein spritzgegossenes Ende mit Gewinde zur Aufnahme eines Schraubdeckels mit Gewinde umfasst und vorzugsweise ferner den Schraubdeckel mit Gewinde umfasst.

5. Nachfüllbarer Polyesterbehälter nach Anspruch 1, wobei die Polyesterzusammensetzung ein Homopolymer oder Copolymer von Polyethylenterephthalat (PET) umfasst und
wobei es sich bei der Polyesterzusammensetzung vorzugsweise weitestgehend um Polyethylenterephthalat (PET) handelt.

6. Nachfüllbarer Polyesterbehälter nach Anspruch 1, wobei es sich bei dem Behälter um einen Einschicht- oder Mehrschichtbehälter handelt und der Behälter eine Polyesterzusammensetzung und ein oder mehrere aus Polyamid, Polycarbonat, Acryl/Imid, amorphem Nylon, Polyacrylnitril (PAN), Polystyrol, kristallisierbarem Nylon, Polyethylen (PE), Polypropylen (PP) und Polyvinylchlorid (PVC) ausgewählte Polymere umfasst und
wobei die Polyesterzusammensetzung vorzugsweise ein oder mehrere aus Homopolymeren, Copolymeren oder Mischungen von Polyethylenterephthalat (PET); Polybutylenterephthalat (PBT); Polypropylenterephthalat (PPT); Polyethylennaphthalat (PEN); Poly(ethylenfuranoat) (PEF) und Cyclohexandimethanol-PET-Copolymer ausgewählte Polymere umfasst.

7. Verfahren zur Verringerung von Verschleiß bei einem nachfüllbaren Polyesterbehälter, wobei der nachfüllbare Polyesterbehälter eine Polyesterzusammensetzung umfasst, wobei das Verfahren Folgendes umfasst:
Bereitstellen eines nicht durchgängigen hervorstehenden Verschleißbunds um den größten Umfang des Behälters herum, wobei der äußere Durchmesser des Verschleißbunds größer als der äußere Durchmesser des Behälters oberhalb und unterhalb des Verschleißbunds ist; und
Bereitstellen eines zweiten hervorstehenden Verschleißbunds um den zweitgrößten Umfang des Behälters herum.

8. Verfahren nach Anspruch 7, wobei der Verschleißbund eine Breite von etwa 0,5 mm bis etwa 50 mm aufweist und/oder
wobei es sich bei dem Boden des Behälters um einen Petaloid- oder Champagnerboden handelt.

9. Verfahren nach Anspruch 7, wobei der Behälter ferner ein spritzgegossenes Ende mit Gewinde zur Aufnahme eines Schraubdeckels mit Gewinde umfasst und
wobei der Behälter vorzugsweise ferner den Schraubdeckel mit Gewinde umfasst.

10. Verfahren nach Anspruch 7, wobei die Polyesterzusammensetzung ein Homopolymer oder Copolymer von Polyethylenterephthalat (PET) umfasst und
wobei es sich bei der Polyesterzusammensetzung vorzugsweise weitestgehend um Polyethylenterephthalat (PET) handelt.

11. Verfahren nach Anspruch 7, wobei es sich bei dem Behälter um einen Einschicht- oder Mehrschichtbehälter handelt und der Behälter eine Polyesterzusammensetzung und ein oder mehrere aus Polyamid, Polycarbonat, Acryl/Imid, amorphem Nylon, Polyacrylnitril (PAN), Polystyrol, kristallisierbarem Nylon, Polyethylen (PE), Polypropylen (PP) und Polyvinylchlorid (PVC) ausgewählte Polymere umfasst und
wobei die Polyesterzusammensetzung vorzugsweise ein oder mehrere aus Homopolymeren, Copolymeren oder Mischungen von Polyethylenterephthalat (PET); Polybutylenterephthalat (PBT); Polypropylenterephthalat (PPT); Polyethylennaphthalat (PEN); Poly(ethylenfuranoat) (PEF) und Cyclohexandimethanol-PET-Copolymer ausgewählte Polymere umfasst.

12. Abgepacktes Getränk, wobei das Getränk in einem nachfüllbaren Polyesterbehälter nach Anspruch 1 abgepackt ist.

## Revendications

1. Récipient rechargeable de polyester comprenant une composition de polyester,
le récipient comprenant :
une première bande d'usure surélevée autour de la circonférence la plus grande du récipient, le diamètre externe de la bande d'usure étant plus grand que le diamètre externe du récipient au-dessus et en dessous de la bande d'usure ; et
une deuxième bande d'usure surélevée autour de la deuxième plus grande circonférence du récipient, **caractérisé en ce que** la première bande d'usure surélevée n'est pas continue.

2. Récipient rechargeable de polyester selon la revendication 1, la bande d'usure comprenant un type de forme géométrique, chaque forme individuelle possédant des tailles ou proportions relatives identiques ou différentes, ou la bande d'usure comprenant plus d'un type de forme géométrique, chaque type possédant des tailles ou proportions relatives identiques ou différentes, ou
la bande d'usure comprenant un type ou plus d'un type de forme géométrique, chaque forme individuelle étant choisie parmi des triangles, des rectangles, des losanges, des polygones réguliers ou irréguliers possédant un quelconque nombre souhaité de côtés inférieur à environ 12, ou des formes irrégulières, les formes ne s'emboîtant pas sur un système de convoyeur.

3. Récipient rechargeable de polyester selon la revendication 1, la bande d'usure possédant une largeur allant d'environ 0,5 mm à environ 50 mm, et/ou
la base du récipient étant un pétaloïde ou une base de type champenois.

4. Récipient rechargeable de polyester selon la revendication 1, comprenant en outre un goulot fileté moulé par injection pour la réception d'une fermeture filetée, et préférablement comprenant en outre la fermeture filetée.

5. Récipient rechargeable de polyester selon la revendication 1, la composition de polyester comprenant un homopolymère ou copolymère de poly(téréphtalate d'éthylène) (PET), et
préférablement la composition de polyester étant sensiblement un poly(téréphtalate d'éthylène) (PET) .

6. Récipient rechargeable de polyester selon la revendication 1, le récipient étant un récipient monocouche ou multicouche et comprenant une composition de polyester et un ou plusieurs polymères choisis parmi un polyamide, un polycarbonate, un acrylique/imide, un nylon amorphe, un polyacrylonitrile (PAN), un polystyrène, un nylon cristallisable, un polyéthylène (PE), un polypropylène (PP), et un poly(chlorure de vinyle) (PVC), et
préférablement la composition de polyester comprenant un ou plusieurs polymères choisis parmi des homopolymères, des copolymères ou des mélanges de poly(téréphtalate d'éthylène) (PET) ; de poly(téréphtalate de butylène) (PBT) ; de poly(téréphtalate de propylène) (PPT) ; de poly(naphtalate d'éthylène) (PEN) ; de poly(furannoate d'éthylène) (PEF) ; et d'un copolymère de cyclohexanediméthanol/PET.

7. Procédé pour la réduction des éraflures d'un récipient rechargeable de polyester, le récipient rechargeable de polyester comprenant une composition de polyester, le procédé comprenant :
la mise à disposition d'une bande d'usure surélevée non continue autour de la circonférence la plus grande du récipient, le diamètre externe de la bande d'usure étant plus grand que le diamètre externe du récipient au-dessus et en dessous de la bande d'usure ; et
la mise à disposition d'une deuxième bande d'usure surélevée autour de la deuxième plus grande circonférence du récipient.

8. Procédé selon la revendication 7, la bande d'usures possédant une largeur allant d'environ 0,5 mm à environ 50 mm, et/ou
la base du récipient étant un pétaloïde ou une base de type champenois.

9. Procédé selon la revendication 7, le récipient comprenant en outre un goulot fileté moulé par injection pour la réception d'une fermeture filetée, et
préférablement le récipient comprenant en outre la fermeture filetée.

10. Procédé selon la revendication 7, la composition de polyester comprenant un homopolymère ou copolymère de poly(téréphtalate d'éthylène) (PET), et
préférablement la composition de polyester étant sensiblement un poly(téréphtalate d'éthylène) (PET) .

11. Procédé selon la revendication 7, le récipient étant un récipient monocouche ou multicouche et comprenant une composition de polyester et un ou plusieurs polymères choisis parmi un polyamide, un polycarbonate, un acrylique/imide, un nylon amorphe, un polyacrylonitrile (PAN), un polystyrène, un nylon cristallisable, un polyéthylène (PE), un polypropylène (PP), et un poly(chlorure de vinyle) (PVC), et
préférablement la composition de polyester comprenant un ou plusieurs polymères choisis parmi des homopolymères, des copolymères ou des mélanges de poly(téréphtalate d'éthylène) (PET) ; de poly(téréphtalate de butylène) (PBT) ; de poly(téréphtalate de propylène) (PPT) ; de poly(naphtalate d'éthylène) (PEN) ; de poly(furannoate d'éthylène) (PEF) ; et d'un copolymère de cyclohexanediméthanol/PET.

12. Boisson conditionnée, la boisson étant conditionnée dans un récipient rechargeable de polyester selon la revendication 1.
